# EUROPEAN PATENT SPECIFICATION

(11) **EP 4 357 057 B1**
(45) Date of publication and mention of the grant of the patent: **03.12.2025**
(21) Application number: 22202674.2
(22) Date of filing: 20.10.2022
(51) Int. Cl.: B23C 5/10

(54) **SHOULDERING INSERT AND SHOULDER MILLING TOOL**
SCHULTERFRÄSEINSATZ UND SCHULTERFRÄSWERKZEUG
INSERT D'ÉPAULEMENT ET OUTIL DE FRAISAGE D'ÉPAULEMENT

(43) Date of publication of application: 24.04.2024
(73) Proprietor: CERATIZIT Luxembourg S.à r.l., 8232 Mamer (LU)
(72) Inventor: KISTER, Fabien, 8232 Mamer (LU)
(74) Representative: Ciesla, Dirk

(56) References cited:
- WO-A1-2016/120099
- US-A1- 2018 304 382
- US-A1- 2019 160 557

## Description

The present invention relates to a shouldering insert according to the preamble of claim 1.

The present invention relates further to a shoulder milling tool according to the preamble of claim 15.

Shoulder milling generates in a workpiece two faces simultaneously which requires peripheral milling by a main cutting edge in combination with face milling by a wiper cutting edge.

When shoulder milling pockets, it is preferred that the shoulder milling tool enters the workpiece under a ramping motion. Ramping refers to a simultaneous radial and axial feed of the shoulder milling tool.

Thus, the shoulder milling tool moves along an inclined path during ramping. When the shoulder milling tool has reached a given depth ramping ends and shoulder milling continuous under a radial feed only.

The milling insert shown in WO 2016 120 099 A1 has a two-folded rotational symmetry with two major cutting edge portions, two surface wiping cutting edge portions and two ramping cutting edge portions. Depending on index position, only one of the major cutting edge portions is active at a time. The milling insert shown in WO 2016 120 099 A1 has limited ramping capabilities since increasing the ramping cutting edge portions shortens the main cutting edges.

The objective of the present invention is to provide a shouldering insert and a shoulder milling tool with improved ramping capabilities.

The objective is solved by the shouldering insert according to claim 1. Preferred embodiments are described in the dependent claims, which can be combined freely amongst each other.

The shouldering insert has a top surface, a bottom surface and a peripheral surface between the top surface and the bottom surface, wherein a top cutting region is shaped by the peripheral surface and the top surface and wherein a bottom cutting region is shaped by the peripheral surface and the bottom surface, wherein the top cutting region and the bottom cutting region each have a main cutting edge, a wiper cutting edge joined to the main cutting edge and a ramping cutting edge joined to the wiper cutting edge, wherein the peripheral surface has a radial support side, wherein in a plane view of the top surface the main cutting edges are arranged on the same side of the shouldering insert and opposite to the radial support side, the wiper cutting edges opposite to each other and the ramping cutting edges opposite to each other, wherein within the shouldering insert the top cutting region is indexable only with the bottom cutting region.

In that the top cutting region is indexable with the bottom cutting region is understood to mean that the bottom cutting region can replace the top cutting region such that a ramping operation and a shoulder milling operation associated with the top cutting region can be continued with the bottom cutting region instead of the top cutting region. Thus, ideally the top cutting region and the bottom cutting region are identical in an unworn state of the shouldering insert, though minor dissimilarities between the top cutting region and the bottom cutting region are acceptable as long as the top cutting region and the bottom cutting region enable with respect to said unworn state the same ramping and shoulder milling geometry and dimensions. The minor dissimilarities result typically from manufacturing the shouldering insert by powder pressing and subsequent sintering.

In that in the plane view of the top surface the main cutting edges are arranged on the same side of the shouldering insert and opposite to the radial support side, the wiper cutting edges opposite to each other and the ramping cutting edges opposite to each other, means that the shouldering insert can be rotated by 180° with respect to a rotation axis crossing the peripheral surface on parts of the main cutting edges and crossing the radial support side. The 180° rotation brings the bottom cutting region in a position and orientation inhabited by the top cutting region before performing the 180° rotation.

In that in the plane view of the top surface the main cutting edges are arranged on the same side of the shouldering insert and opposite to the radial support side, the wiper cutting edges opposite to each other and the ramping cutting edges opposite to each other and in that within the shouldering insert the top cutting region is indexable only with the bottom cutting region, enables the ramping cutting edge of the top cutting region to be elongated and inclined interference-free with respect to the main cutting edge of the bottom cutting region and also with respect to the main cutting edge of the top cutting region itself. That the main cutting edge of the top cutting region is not inferred with by changing the ramping cutting edge of the top cutting region follows from maintaining the indexability between the top cutting region and bottom cutting region.

In that the top cutting region is indexable only with the bottom cutting region means that the top cutting region is the only cutting region shaped by the peripheral surface and the top surface having at the same time peripheral milling, face milling and ramping capabilities, vice versa for the bottom cutting and the peripheral surface region.

The shouldering insert can follow the shape of a truncated triangle being truncated more on parts of a former top corner than on parts of thereto respective former two side corners, wherein the former side corners are connected by a base side, wherein the main cutting edges are arranged on parts of the base side, wherein the radial support side follows the truncated triangle where the former top corner is truncated (thus each main cutting edge is longer than the radial support side), wherein the wiper cutting edges follow the truncated triangle where the former side corners are truncated, wherein the ramping cutting edges follow the side legs of the truncated triangle which remain after truncating the former top corner and the former side corners.

"Radial" in "radial support side" refers to the radial direction regarding a tool body rotation axis about which a tool body rotates during shoulder milling.

In a shoulder milling operation, depending on which of said cutting regions is positioned and oriented cutting active, the main cutting edge removes material in a radial feed direction, the wiper cutting edge performs a shallow surface smoothing cut of a workpiece bottom surface which the main cutting edge leaves behind.

In a ramping operation, depending on which of said cutting regions is positioned and oriented cutting active, the ramping cutting edge cuts both radially and axially when the shouldering insert enters a workpieces under a radial-axial feed motion.

According to a preferred embodiment the shouldering insert has a clamping engagement structure extending at least partly into the shouldering insert on parts of the top surface and on parts the bottom surface, wherein in the plane view of the top surface the clamping engagement structure is located closer to the radial support side than to the main cutting edges. Thus, the clamping engagement structure is located to geometrically strengthening the shouldering insert on parts of the main cutting edges relative to the radial support side. When the clamping engagement structure extends completely into the shouldering insert a through hole is shaped. When the clamping engagement structure extends partly into the shouldering insert two opposite depressions are shaped.

According to a preferred embodiment the shouldering insert has a cross-section which follows in the plane view of the top surface a cross-section line crossing the radial support side perpendicularly, the clamping engagement structure centrally and the main cutting edges, wherein the cross-section has a cross-sectional area on parts of the main cutting edges and a cross-sectional area on parts of the radial support side, wherein said cross-sectional areas are separated from each other by the clamping engagement structure, wherein the cross-sectional area on parts of the main cutting edges is larger than the cross-sectional area on parts of the radial support side by a factor ranging from 1.1 to 5. That the cross-sectional area on parts of the main cutting edges is larger than on parts of the radial support side by the factor ranging from 1.1 to 5 yields an optimal compromise between geometrically strengthening the shouldering insert on parts of the main cutting edges, i.e., where the main cutting forces are exerted during shoulder milling, and leaving enough geometric strength over for radially supporting the shouldering insert against a tool body.

According to a preferred embodiment the clamping engagement structure is a through hole extending through the shouldering insert. In that the clamping engagement structured is a through hole extending through the shouldering insert enables the shouldering insert to be releasably secured by a clamping screw.

According to a preferred embodiment a ramping angle ranging from 10° to 60° is associated with the ramping cutting edge of the top cutting region, wherein the ramping angle is measured in the plane view of the top surface outside of the shouldering insert between the ramping cutting edge and a linear extrapolation of the wiper cutting edge of the top cutting region. In that the ramping angle ranges from 10° to 60° yields an optimal compromise between relatively fast ramping and leaving enough material of the shouldering insert over to realize the described clamping engagement structure or another clamping engagement structure. In that the top cutting region is indexable with the bottom cutting region, the ramping cutting edge of the bottom cutting region has the same ramping angle.

According to a preferred embodiment in the plane view of the top surface the peripheral surface protrudes on parts of the main cutting edges outwards beyond the main cutting edges. In that the peripheral surface protrudes on parts of the main cutting edges outwards beyond the main cutting edges increases the wedge angle of the main cutting edges which geometrically strengthens the main cutting edges.

According to a preferred embodiment in the plane view of the top surface the peripheral surface retreats on parts of the ramping cutting edge of the top cutting region behind this ramping cutting edge. That the peripheral surface retreats on parts of the ramping cutting edge of the top cutting region behind this ramping cutting edge sharpens the ramping cutting edge and prevents the shouldering insert better against collision with a workpiece during ramping. In that the top cutting region is indexable with the bottom cutting region, the peripheral surface retreats on parts of the ramping cutting edge of the bottom cutting region analogously.

According to a preferred embodiment in the plane view of the top surface the peripheral surface is aligned with the wiper cutting edge of the top cutting region. That in the plane view of the top surface the peripheral surface is aligned with the wiper cutting edge of the top cutting region improves surface smoothening by the wiper cutting edge.

According to a preferred embodiment the wiper cutting edge of the top cutting region slopes from where it is joined to the main cutting edge towards the bottom surface. In that the wiper cutting edge of the top cutting region slopes from where it is joined to the main cutting edge towards the bottom surface yields that the wiper cutting edge enters a workpiece subsequently along its length, i.e., the wiper cutting edge enters the workpiece firstly where it is joined to the main cutting edge and lastly where it is joined to the ramping cutting edge. The resulting wiper cutting edge cut becomes smoother thereby. Since the top cutting region is indexable with the bottom cutting region, the wiper cutting edge of the bottom cutting region slopes analogously.

According to a preferred embodiment the main cutting edge of the top cutting region slopes from where it is joined to the wiper cutting edge towards the bottom surface. In that the main cutting edge of the top cutting region slopes from where it is joined to the wiper cutting edge towards the bottom surface yields that the main cutting edge enters a workpiece subsequently along its length, i.e., the main cutting edge enters firstly where it is joined to the wiper cutting edge and lastly at an opposite end. The resulting main cutting edge cut becomes smoother thereby. Since the top cutting region is indexable with the bottom cutting region, the main cutting edge of the bottom cutting region slopes analogously.

According to a preferred embodiment the top cutting region is the only cutting region on parts of the top surface. This reduces in a cost saving manner the cutting edges on parts of the top surface to the cutting edge of the top cutting region.

According to a preferred embodiment the top surface has a plane seat section arranged at least partly beneath the main cutting edge of the top cutting region. That the top surface has the plane seat section stabilizes its contact with a clamping element, e.g., a clamping screw or a clamping finger. That the plane seat section is arranged at least partly beneath the main cutting edge of the top cutting region means that the peripheral surface raises on parts of the main cutting edge of the top cutting edge at least partly above the plane seat section in order to protect the plane seat section from chips created by the main cutting edge.

According to a preferred embodiment the radial support side is wedge shaped in a cross-section crossing the radial support side in the plane view of the top surface perpendicularly. In that the radial support side is wedge shaped in the cross-section crossing the radial support side in the plane view of the top surface perpendicularly enables the radial support side to be engaged with a corresponding counter wedge shaped side of a tool body which improves radial support of the shouldering insert. That the radial support side is wedge shaped in the cross-section crossing the radial support side in the plane view of the top surface perpendicularly means that the radial support side can protrude in said cross-section inwards or outwards. When the radial support side protrudes outwards in said cross-section a truncated wedge shape is preferred since this reduces mechanically contact stress.

According to a preferred embodiment the wiper cutting edge and the main cutting edge of the top cutting region are joined together by a rounded cutting corner having a rounding radius ranging from 0.05 mm to 6 mm. In that the cutting edge of the top cutting region are joined together by the rounded cutting corner having a rounding radius ranging from 0.05 mm to 6 mm improves the surface quality of a workpiece corner created by shouldering milling with the shouldering insert.

According to a preferred embodiment the shouldering insert is made from a sintered cemented carbide. That the shouldering insert is made from a sintered cemented carbide improves its wear resistance.

The objective is also solved by the shoulder milling tool according to claim 15.

The shoulder milling tool has a tool body and at least two shouldering inserts mounted releasably into mounting pockets of the tool body, wherein at least one shouldering insert of the at least two shouldering inserts is a shouldering insert according to any of the preferred embodiments of the shouldering insert disclosed herein. In that at least one shouldering insert of the at least two shouldering inserts is a shouldering insert according to any of the preferred embodiments of the shouldering insert disclosed herein means that the advantages described for the shouldering insert are being realized in their mounted stated.

Further advantages of the invention will become apparent from the following description of an embodiment with reference to the enclosed figures. The disclosed features can be incorporated in isolation or in freely selected combinations into the claims.

The Figures show
- Fig. 1:: schematically a shouldering insert in a perspective view;
- Fig. 2:: schematically the shouldering insert in a further perspective view;
- Fig. 3:: schematically a top view of the shouldering insert;
- Fig. 4:: schematically a bottom view of the shouldering insert;
- Fig. 5:: schematically a front-side view of the shouldering insert;
- Fig. 6:: schematically a cross-section through the shouldering insert following the cross-section line A-A in Fig. 3;
- Fig. 7:: schematically a cross-section through the shouldering insert following the cross-section line B-B in Fig. 3;
- Fig. 8:: schematically a cross-section through the shouldering insert following the cross-section line C-C in Fig. 3.

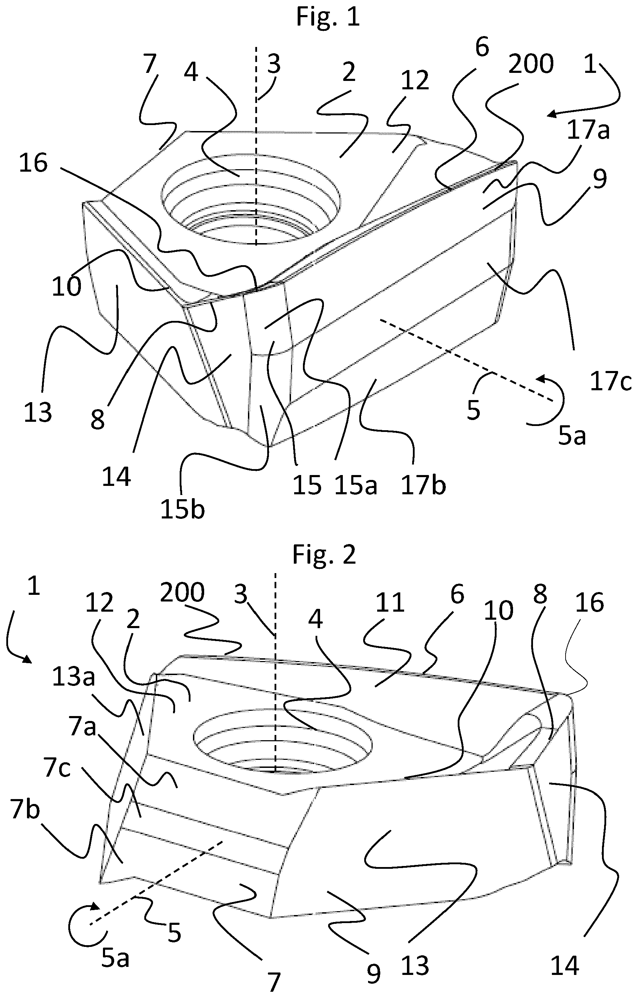

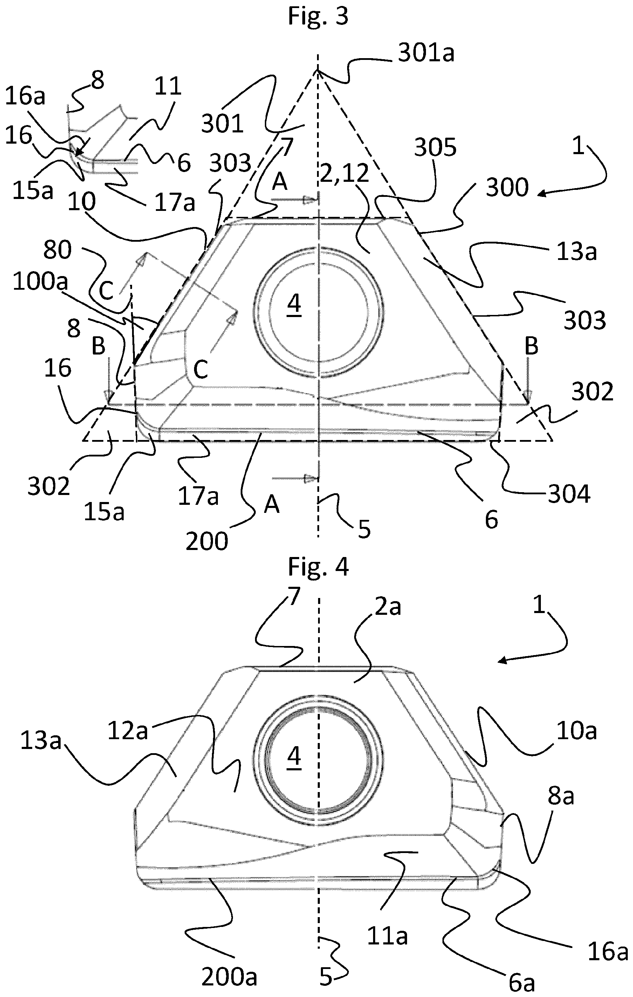

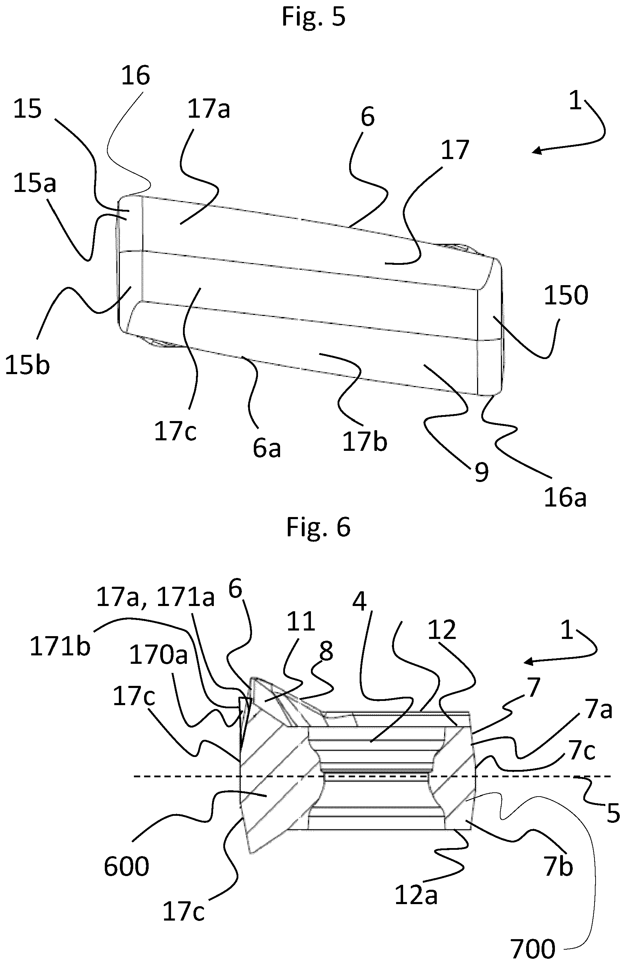

Figs. 1 to 8 show a shouldering insert 1. Fig. 1 shows the shouldering insert 1 in a perspective view and Fig. 2 in a further perspective view such that Fig. 1 together with Fig. 2 reveal essentially the three-dimensional structure of the shouldering insert 1. Fig. 3 shows the shouldering insert 1 in a top view of a top surface 2 with a viewing direction parallel along a central axis 3 of a through hole 4. Fig. 4 shows the shouldering insert 1 in a bottom view of a bottom surface 2a with a viewing direction parallel along the central axis 3. Fig. 3 and Fig. 4 show together that the top surface 2 and the bottom surface 2a are identical. Fig. 5 shows the shouldering insert 1 in a side view with a viewing direction parallel along a rotation axis 5 to which a rotation direction 5a for indexing the shouldering insert 1 is assigned. Thus the shouldering 1 is indexable such that in an unworn state of the shouldering insert 1, as shown in Figs. 1 to 8, the bottom surface 2a replaces the top surface 2 identically by a 180° rotation in the rotation direction 5a with respect to the rotation axis 5. The shape of the shouldering insert 1 is such said 180° rotation is the only rotation by which the bottom surface 2a can replace the top surface 2 identically.

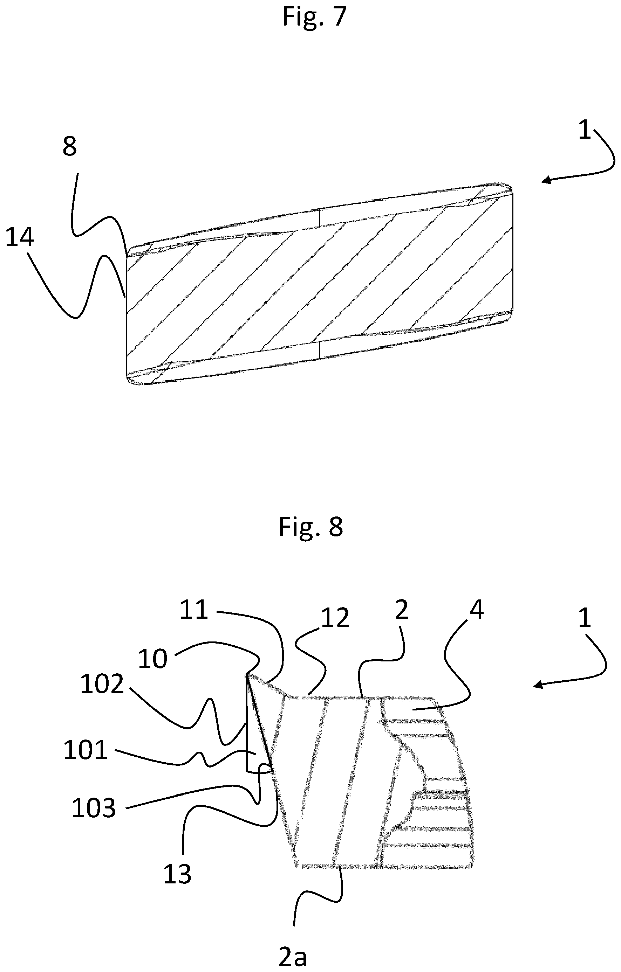

Fig. 6 shows the shouldering insert 1 in a cross-section following the cross-section line A-A in Fig. 3 to reveal a relative geometric strengthening of the shouldering insert 1 on parts of its two main cutting edges 6 and 6a over its cross-section on parts of a radial support side 7 shaped by a peripheral surface 9 extending between the top surface 2 and the bottom surface 2a; the cross-section line crosses the central axis 3 and perpendicularly the radial support side 7. Fig. 7 shows the shouldering insert 1 in a cross-section following the cross-section line C-C in Fig. 3 to reveal the cross-section on parts of two wiper cutting edges 8 and 8a positioned on each side of the cross-section line C-C. Fig. 8 shows the shouldering insert 1 in a cross-section following the cross-section line C-C in Fig. 3 to reveal the cross-section on parts two ramping cutting edges 10 and 10a positioned on each side of the cross-section line C-C.

The shouldering insert 1 has the top surface 2, the bottom surface 2a and the peripheral surface 9 between the top surface 2 and the bottom surface 2a. As can be seen in Fig. 3, the shouldering insert 1 has a top cutting region 200 shaped by the peripheral surface 9 and the top surface 2.

The top cutting region 200 has the main cutting edge 6 arranged and designed for peripheral milling, i.e., the main cutting edge 6 creates a side wall in a workpiece during shoulder milling and extends in a mounted state essentially along a rotation axis of a tool body, a wiper cutting edge 8 joined to the main cutting edge 6, i.e., in a mounted state the wiper cutting edge 8 creates a bottom surface in said workpiece during shoulder milling and extends thus essentially perpendicularly to said rotation axis of the tool body, and a ramping cutting edge 10 which is mostly inactive during shoulder milling but is active during ramping, i.e., when the shouldering insert 1 enters said workpiece along an inclined path with respect to said rotation axis of the tool body the ramping cutting edge 10 becomes active.

The top surface 2 has a curved rake section 11 for chip conduction associated with the top cutting region 200 and a plane seat section 12 from which the curved rake section 11 elevates towards the top cutting region 200 and its main cutting edge 6, wiper cutting edge 8 and ramping cutting edge 10. The circumference of the top surface 2 is elevated where the top cutting region 200 extends and depressed relative thereto outside of the cutting region 200 such that the plane seat surface 12 is laterally accessible outside of the top cutting region 200.

The shouldering insert 1 has the through hole 4 extending through the shouldering insert 1 by intersecting the top surface 2 and the bottom surface 2a. As can be seen in Fig. 3, the through hole 4 is located along the rotation axis 5 closer to the radial support side 7 than to the main cutting edge 6 and thereby also the main cutting edge 6a. The through hole 4 is a clamping engagement structure for a clamping engagement with a clamping screw.

The radial support side 7 has an upper plane support section 7a associated with the top surface 1 and a lower plane support section 7b associated with the bottom surface 2a and between the upper plane support section 7a and the lower plane support section 7b a plane middle support section 7c. In the cross-section shown in Fig. 6 it can be seen that the radial support side 7 is truncated wedge shaped and protrudes outwards in a direction away from the main cutting edges 6 and 6a such that the radial support side 7 can engage with a counter wedge shaped tool body support side.

The peripheral surface 9 has further a plane ramping clearance section 13 joined to the radial support side 9 and associated with the ramping cutting edge 10. The ramping clearance section 13 retreats in the plane view of the top surface 2 behind the ramping cutting edge 10, as can be seen in Fig. 8. The plane ramping clearance section 13 retreats under a ramping clearance angle 101 being spanned in the cross-section according to Fig. 8 by a surface normal axis 102 with respect to the plane seat section 12 and a tangent 103 of the plane ramping clearance section 13. The ramping clearance angle 101 amounts to 15° but may range from 0° to 35°.

The peripheral surface 9 has further a wiper clearance section 14 joined to the ramping clearance section 13. The wiper clearance section 14 is aligned with the wiper cutting edge 8 which can be seen in Fig. 7. The wiper clearance section 14 may also retreat behind the wiper cutting edge 8 analogously to the ramping clearance section 13 by a wiper clearance angle range from 0° to 25°. The 0° degree wiper clearance angle corresponds to the alignment of the wiper clearance section 14 with the wiper cutting edge 8.

The peripheral surface 9 has further a corner section 15 associated with a cutting corner 16 of the top cutting region 200. The cutting corner 16 is part of the top cutting region 200 and joins the main cutting edge 6 to the wiper cutting 8. The cutting corner 16 is rounded under a rounding radius 16a, shown in the magnified inset top left in Fig. 3, which can range from 0.05 mm to 6 mm. The cutting corner 16 in being rounded smoothens a workpiece corner created by the main cutting edge 6. The corner section 15 has an upper rounded corner facet 15a on parts of the top surface 2 and a lower rounded facet 15b on parts of the bottom surface 2a.

The peripheral surface 9 has further a main cutting edge clearance side 17 which is joined to the corner section 15. The main cutting edge clearance side 17 has an upper plane clearance facet 17a associated with the main cutting edge 6 and a lower plane clearance facet 17b associated with the main cutting edge 6a and between the upper plane clearance facet 17a and the lower plane clearance facet 17b a plane middle facet 17c.

The main cutting edge clearance side 17 is in the cross-section shown in Fig. 6 truncated wedge shaped and protrudes outwards in a direction away from the radial support side 7. The upper plane clearance facet 17a is inclined under a main cutting clearance angle 170a which is spanned in the cross-section shown in Fig. 6 by a tangent 171a of the upper plane clearance facet 17a and a surface normal axis 171b with respect to the plane seat section 12. The main cutting clearance angle 170a amounts to 11° and can range from 0° to 20°. The lower clearance facet 17b is inclined analogously to the upper plane clearance facet 17a under the same main cutting clearance angle 170a.

The shouldering insert 1 has, as shown in in Fig. 6, a cross-sectional area 600 on parts of the main cutting edges 6 and 6a and a cross-sectional area 700 on parts of the radial support side 7. The cross-sectional area 600 is separated from the cross-sectional 700 by the through hole 4. In that the through hole 4 is located closer to the radial support side 7 than to the main cutting edges 6 and 6a, the cross-sectional 600 is larger than the cross-sectional area 700 by a factor of 2.3 as depicted in Fig. 6 which lies in the range from 1.1 to 5 in which the factor can lie equally well. In this way the shouldering insert 1 is geometrically strengthening on parts of the main cutting edges 6 and 6a, i.e., where the major cutting forces occur, relative to the support side, i.e., where typically centrifugally forces act being typically smaller than said major cutting forces.

Fig. 6 shows further that the rotation axis 5 is located half-way between the plane seat section 12 and the thereto identical plane seat section 12a of the bottom surface 2a.

The bottom cutting region 200a has the main cutting 6a, a wiper cutting edge 8a joined to the main cutting edge 6a and a ramping cutting edge 10a joined to the wiper cutting edge 10a. The wiper cutting edge 8a is joined to the main cutting edge 6a by a rounded cutting corner 16a. As can be seen by comparing Fig. 3 with Fig. 4, within the shouldering insert 1 the top cutting region 200a is indexable only with the bottom cutting region 200a. Thus, said 180° rotation of the shouldering insert 1 in the rotation direction 5a with respect to the rotation axis 5 replaces the main cutting edge 6 identically with the main cutting edge 6a, the wiper cutting edge 8 identically with the wiper cutting edge 8a, the cutting corner 16 identically with the cutting corner 16a and the ramping cutting edge 10 identically with the ramping cutting edge 10a. Said 180° rotation of the shouldering insert replaces also the top surface 2 identically with the bottom surface 2a. The peripheral surface 9 is rotational symmetric with respect to the 180° rotation from which it follows that the peripheral surface 9 has a ramping clearance side 13a and wiper clearance side (not shown) which identically replace the ramping clearance side 13a and the wiper clearance side 14, respectively, and also a rounded corner section 150 which replaces the rounded corner section 15 identically.

Fig. 3 shows that the ramping cutting edge 10 extends under a ramping angle 100a. The ramping angle 100a is spanned in the top view according to Fig. 3 by a linear extrapolation 80 of the wiper cutting edge 8 and the ramping cutting edge 10. The ramping angle 100a amounts to 35° and can range from 10° to 60°.

As can be seen in Fig. 3 and Fig. 4, if the ramping angle 100a increases, the radial support side 7 becomes shorter in the top view according to Fig. 3, and longer, if the ramping angle 10a decreases, whereas the bottom cutting region 200a and thereby the main cutting edge 6a is not effected by changing the ramping angle 10a. Due to the indexability of the shouldering insert 1, the ramping cutting edge 10a follows any change of the ramping cutting edge 10, the main cutting edge 6a follows any change of the main cutting edge 6 and the wiper cutting edge 8a follows any change of the wiper cutting edge 8.

Fig. 3 shows further that an outermost contour of the shouldering insert 1 follows in the top view according to Fig. 3 the shape of a truncated triangle 300. The truncated triangle 300 is truncated in that its former top corner 301 is cut-off, whose apex 301a is crossed by the rotation axis 5, and in that its respective former side corners 302, lying on each side with respect to the rotation axis 5, are cut-off equally. The wiper cutting edges 8 and 8a follow the truncated triangle 300 where the former side corners 302 are cut-off, the plane middle support section 7c section follows the truncated triangle 300 where the former top corner 301 is cut-off, the ramping cutting edges 10 and 10a follow the truncated triangle 300 along its remaining side legs 303. The truncated triangle 300 has more form its former top corner cut-off than from its former side corners 302 which means that the plane middle support section 7c is shorter than the plane middle facet 17c, i.e., the main cutting edges 6 and 6a are shorter than the radial support side 7. The truncated triangle has 300 a base side 304 on parts of the main cutting edge 6 and 6a and a shorter top side 305 on parts of the radial support side 7.

Fig. 6 shows that the main cutting edge 6 slopes downwards from where it is joined to the wiper cutting edge 8 towards the plane seat section 12a and thereby towards the bottom surface 2a such that the main cutting edge 6 enters a workpiece subsequently.

Fig. 6 shows that the wiper cutting edge 8 slopes downwards from where it is joined to the main cutting edge 6 towards the plane seat section 12a and thereby towards the bottom surface 2a such that the wiper cutting edge 6 enters a workpiece subsequently.

The shouldering insert 1 and a further shouldering insert designed analogously to the shouldering insert 1 are mountable into a mounting pockets of a tool body (not shown) to provide a shoulder milling tool, wherein the shouldering insert 1 and the further shouldering insert are releasably clamped by a clamping screw inserted into the through hole 4 of the shouldering insert 1 and a corresponding through hole of the further shouldering insert.

The shouldering insert 1 is made from a sintered cemented carbide.

Fig. 1 to 8 show that the shouldering insert 1 is only indexable with respect to the rotation axis 5 such that the ramping cutting edges 10 and 10a can be varied independently of the main cutting edge 6 and 6a and the shouldering insert 1 is geometrically strengthened on parts of the main cutting edges 6 and 6a relative to its cross-section on parts of the radial support side 7 by which the shouldering insert 1 has a high degree of design freedom regarding its ramping properties and is geometrically strengthening where the major cutting forces occur during shoulder milling. The latter due to the described indexability which allows the through hole 4 to located freely between the radial support side 7 and the main cutting edges 6 and 6a.

## Claims

1. A shouldering insert (1) having a top surface (2), a bottom surface (2a) and a peripheral surface (9) between the top surface (2) and the bottom surface (2a), **characterized in that** a top cutting region (200) is shaped by the peripheral surface (9) and the top surface (2) and **in that** a bottom cutting region (200a) is shaped by the peripheral surface (9) and the bottom surface (2a), wherein the top cutting region (200) and the bottom cutting region (200a) each have a main cutting edge (6, 6a), a wiper cutting edge (8, 8a) joined to the main cutting edge (6, 6a) and a ramping cutting edge (10, 10a) joined to the wiper cutting edge (8, 8a), wherein the peripheral surface (9) has a radial support side (7), wherein in a plane view of the top surface (2) the main cutting edges (6, 6a) are arranged on the same side of the shouldering insert (1) and opposite to the radial support side (7), the wiper cutting edges (8, 8a) opposite to each other and the ramping cutting edges (10, 10a) opposite to each other, wherein within the shouldering insert (1) the top cutting region (200) is indexable only with the bottom cutting region (200a).

2. The shouldering insert (1) according to claim 1, wherein the shouldering insert (1) has a clamping engagement structure (4) extending at least partly into the shouldering insert (1) on parts of the top surface (2) and on parts the bottom surface (2a), wherein in the plane view of the top surface (2) the clamping engagement structure (4) is located closer to the radial support side (7) than to the main cutting edges (6, 6a).

3. The shouldering insert (1) according to claim 2, wherein the shouldering insert (1) has a cross-section which follows in the plane view of the top surface (2) a cross-section line crossing the radial support side (7) perpendicularly, the clamping engagement structure (4) centrally and the main cutting edges (6, 6a), wherein the cross-section has a cross-sectional area (600) on parts of the main cutting edges (6, 6a) and a cross-sectional area (700) on parts of the radial support side (7), wherein said cross-sectional areas (600, 700) are separated from each other by the clamping engagement structure (4), wherein the cross-sectional area (600) on parts of the main cutting edges (6, 6a) is larger than the cross-sectional area (700) on parts of the radial support side by a factor ranging from 1.1 to 5.

4. The shouldering insert (1) according to claim 2 or 3, wherein the clamping engagement structure (4) is a through hole (4) extending through the shouldering insert (4).

5. The shouldering insert (1) according to any of the preceding claims, wherein a ramping angle (100a) ranging from 10° to 60° is associated with the ramping cutting edge (10) of the top cutting region (200), wherein the ramping angle (100a) is measured in the plane view of the top surface (2) outside of the shouldering insert (1) between the ramping cutting edge (10) and a linear extrapolation (80) of the wiper cutting edge (8) of the top cutting region (200).

6. The shouldering insert (1) according to any of the preceding claims, wherein in the plane view of the top surface (2) the peripheral surface (9) protrudes on parts of the main cutting edges (6, 6a) outwards beyond the main cutting edges (6, 6a).

7. The shouldering insert (1) according to any of the preceding claims, wherein in the plane view of the top surface (2) the peripheral surface (9) retreats on parts of the ramping cutting edge (10) of the top cutting region (200) behind this ramping cutting edge (10).

8. The shouldering insert (1) according to any of the preceding claims, wherein in the plane view of the top surface (2) the peripheral surface (9) is aligned with the wiper cutting edge (8) of the top cutting region (200).

9. The shouldering insert (1) according to any of the preceding claims, wherein the wiper cutting edge (8) of the top cutting region (200) slopes from where it is joined to the main cutting edge (6) towards the bottom surface (2a).

10. The shouldering insert (1) according to any of the preceding claims, wherein the main cutting edge (6) of the top cutting region (200) slopes from where it is joined to the wiper cutting edge (8) towards the bottom surface (2a).

11. The shouldering insert (1) according to any of the preceding claims, wherein the top surface (2) has a planar seat section (12) arranged at least partly beneath the main cutting edge (6) of the top cutting region (200).

12. The shouldering insert (1) according to any of the preceding claims, wherein the top cutting region (200) is the only cutting region on parts of the top surface (2).

13. The shouldering insert (1) according to any of the preceding claims, wherein the radial support side (7) is wedge shaped in a cross-section crossing the radial support side (7) in a plane view of the top surface (2) perpendicularly.

14. The shouldering insert (1) according to any of the preceding claims, wherein the wiper cutting edge (8) and the main cutting edge (10) of the top cutting region (200) are joined together by a rounded cutting corner (16) having a rounding radius (16a) ranging from 0.05 mm to 6 mm.

15. A shoulder milling tool having a tool body and at least two shouldering inserts mounted releasably into mounting pockets of the tool body, **characterized in that** at least one shouldering insert (1) of the at least two shouldering inserts is a shouldering insert (1) according to any of the preceding claims.

## Patentansprüche

1. Eckfräseinsatz (1) mit einer oberen Fläche (2), einer unteren Fläche (2a) und einer Umfangsfläche (9) zwischen der oberen Fläche (2) und der unteren Fläche (2a), **dadurch gekennzeichnet, dass** ein oberer Schneidbereich (200) durch die Umfangsfläche (9) und die obere Fläche (2) geformt ist und ein unterer Schneidbereich (200a) durch die Umfangsfläche (9) und die untere Fläche (2a) geformt ist, wobei der obere Schneidbereich (200) und der untere Schneidbereich (200a) jeweils eine Hauptschneide (6, 6a), eine mit der Hauptschneide (6, 6a) verbundene Planschneide (8, 8a) und eine mit der Planschneide (8, 8a) verbundene Rampenschneide (10, 10a) aufweisen, wobei die Umfangsfläche (9) eine radiale Stützseite (7) aufweist, wobei in der Draufsicht auf die obere Fläche (2) die Hauptschneiden (6, 6a) auf derselben Seite des Eckfräseinsatzes (1) und gegenüber der radialen Stützseite (7) angeordnet sind, die Planschneiden (8, 8a) einander gegenüberliegen und die Rampenschneiden (10, 10a) einander gegenüberliegen, wobei innerhalb des Eckfräseinsatzes (1) der obere Schneidbereich (200) nur mit dem unteren Schneidbereich (200a) indexierbar ist.

2. Eckfräseinsatz (1) nach Anspruch 1, wobei der Eckfräseinsatz (1) eine Spannstruktur (4) aufweist, die sich zumindest teilweise in den Eckfräseinsatz (1) hinein erstreckt, und zwar auf Seiten der oberen Fläche (2) und auf Seiten der unteren Fläche (2a), wobei in der Draufsicht auf die obere Fläche (2) die Spannstruktur (4) näher an der radialen Stützseite (7) als an den Hauptschneiden (6, 6a) liegt.

3. Eckfräseinsatz (1) nach Anspruch 2, wobei der Eckfräseinsatz (1) einen Querschnitt aufweist, der in der Draufsicht auf die obere Fläche (2) einer Querschnittslinie folgt, die die radiale Stützseite (7) senkrecht, die Spannstruktur (4) zentral und die Hauptschneiden (6, 6a) kreuzt, wobei der Querschnitt eine Querschnittsfläche (600) auf Seiten der Hauptschneiden (6, 6a) und eine Querschnittsfläche (700) auf Seiten der radialen Stützseite (7) aufweist, wobei die genannten Querschnittsflächen (600, 700) durch die Spannstruktur (4) voneinander getrennt sind, wobei die Querschnittsfläche (600) auf Seiten der Hauptschneiden (6, 6a) größer ist als die Querschnittsfläche (700) auf Seiten der radialen Stützseite (7) um einen Faktor im Bereich von 1,1 bis 5.

4. Eckfräseinsatz (1) nach Anspruch 2 oder 3, wobei die Spannstruktur (4) ein Durchgangsloch (4) ist, das sich durch den Eckfräseinsatz (4) hindurch erstreckt.

5. Eckfräseinsatz (1) nach einem der vorhergehenden Ansprüche, wobei ein Rampenwinkel (100a) im Bereich von 10° bis 60° mit der Rampenschneide (10) des oberen Schneidbereichs (200) verbunden ist, wobei der Rampenwinkel (100a) in der Draufsicht auf die obere Fläche (2) außerhalb des Eckfräseinsatzes (1) zwischen der Rampenschneide (10) und einer linearen Extrapolation (80) der Planschneide (8) des oberen Schneidbereichs (200) gemessen wird.

6. Eckfräseinsatz (1) nach einem der vorhergehenden Ansprüche, wobei in der Draufsicht auf die obere Fläche (2) die Umfangsfläche (9) auf Seiten der Hauptschneiden (6, 6a) über die Hauptschneiden (6, 6a) hinaus nach außen hervorsteht.

7. Eckfräseinsatz (1) nach einem der vorhergehenden Ansprüche, wobei in der Draufsicht auf die obere Fläche (2) die Umfangsfläche (9) auf Seiten der Rampenschneide (10) des oberen Schneidbereichs (200) hinter dieser Rampenschneide (10) zurücktritt.

8. Eckfräseinsatz (1) nach einem der vorhergehenden Ansprüche, wobei in der Draufsicht auf die obere Fläche (2) die Umfangsfläche (9) mit der Planschneide (8) des oberen Schneidbereichs (200) fluchtet.

9. Eckfräseinsatz (1) nach einem der vorhergehenden Ansprüche, wobei die Planschneide (8) des oberen Schneidbereichs (200) von ihrer Verbindung mit der Hauptschneide (6) zur unteren Fläche (2a) hin geneigt ist.

10. Eckfräseinsatz (1) nach einem der vorhergehenden Ansprüche, wobei die Hauptschneide (6) des oberen Schneidbereichs (200) von ihrer Verbindung mit der Planschneide (8) zur unteren Fläche (2a) hin geneigt ist.

11. Eckfräseinsatz (1) nach einem der vorhergehenden Ansprüche, wobei die obere Fläche (2) einen ebenen Sitzbereich (12) aufweist, der zumindest teilweise unterhalb der Hauptschneide (6) des oberen Schneidbereichs (200) angeordnet ist.

12. Eckfräseinsatz (1) nach einem der vorhergehenden Ansprüche, wobei der obere Schneidbereich (200) der einzige Schneidbereich auf Seiten der oberen Fläche (2) ist.

13. Eckfräseinsatz (1) nach einem der vorhergehenden Ansprüche, wobei die radiale Stützseite (7) in einem Querschnitt, der die radiale Stützseite (7) in der Draufsicht auf die obere Fläche (2) senkrecht kreuzt, keilförmig ist.

14. Eckfräseinsatz (1) nach einem der vorhergehenden Ansprüche, wobei die Planschneide (8) und die Hauptschneide (10) des oberen Schneidbereichs (200) durch eine abgerundete Schneidecke (16) miteinander verbunden sind, die einen Rundungsradius (16a) im Bereich von 0,05 mm bis 6 mm aufweist.

15. Eckfräswerkzeug mit einem Werkzeugkörper und mindestens zwei Eckfräseinsätzen, die lösbar in Aufnahmevertiefungen des Werkzeugkörpers montiert sind, **dadurch gekennzeichnet, dass** mindestens ein Eckfräseinsatz (1) der mindestens zwei Eckfräseinsätze ein Eckfräseinsatz (1) nach einem der vorhergehenden Ansprüche ist.

## Revendications

1. Pièce rapportée de formation d'épaulement (1) ayant une surface supérieure (2), une surface inférieure (2a) et une surface périphérique (9) entre la surface supérieure (2) et la surface inférieure (2a), **caractérisée en ce qu'**une région de coupe supérieure (200) est formée par la surface périphérique (9) et la surface supérieure (2) et **en ce qu'**une région de coupe inférieure (200a) est formée par la surface périphérique (9) et la surface inférieure (2a), dans laquelle la région de coupe supérieure (200) et la région de coupe inférieure (200a) ont chacune une arête de coupe principale (6, 6a), une arête de coupe racleuse (8, 8a) jointe à l'arête de coupe principale (6, 6a) et une arête de coupe à rampe (10, 10a) jointe à l'arête de coupe racleuse (8, 8a), dans laquelle la surface périphérique (9) a un côté de support radial (7), dans laquelle, dans une vue en plan de la surface supérieure (2), les arêtes de coupe principales (6, 6a) sont agencées sur le même côté de la pièce rapportée de formation d'épaulement (1) et de façon opposée au côté de support radial (7), les arêtes de coupe racleuses (8, 8a) étant opposées l'une à l'autre et les arêtes de coupe à rampe (10, 10a) étant opposées l'une à l'autre, dans laquelle, à l'intérieur de la pièce rapportée de formation d'épaulement (1), la région de coupe supérieure (200) est indexable seulement avec la région de coupe inférieure (200a).

2. Pièce rapportée de formation d'épaulement (1) selon la revendication 1, dans laquelle la pièce rapportée de formation d'épaulement (1) a une structure d'entrée en prise de serrage (4) s'étendant au moins partiellement dans la pièce rapportée de formation d'épaulement (1) sur des parties de la surface supérieure (2) et sur des parties la surface inférieure (2a), dans laquelle, dans la vue en plan de la surface supérieure (2), la structure d'entrée en prise de serrage (4) est située plus près du côté de support radial (7) que des arêtes de coupe principales (6, 6a).

3. Pièce rapportée de formation d'épaulement (1) selon la revendication 2, dans laquelle la pièce rapportée de formation d'épaulement (1) a une coupe transversale qui suit, dans la vue en plan de la surface supérieure (2), une ligne de coupe transversale croisant le côté de support radial (7) perpendiculairement, la structure d'entrée en prise de serrage (4) centralement et les arêtes de coupe principales (6, 6a), dans laquelle la coupe transversale a une superficie de coupe transversale (600) sur des parties des arêtes de coupe principales (6, 6a) et une superficie de coupe transversale (700) sur des parties du côté de support radial (7), dans laquelle lesdites superficies de coupe transversale (600, 700) sont séparées l'une de l'autre par la structure d'entrée en prise de serrage (4), dans laquelle la superficie de coupe transversale (600) sur des parties des arêtes de coupe principales (6, 6a) est plus grande que la superficie de coupe transversale (700) sur des parties du côté de support radial selon un facteur variant de 1,1 à 5.

4. Pièce rapportée de formation d'épaulement (1) selon la revendication 2 ou 3, dans laquelle la structure d'entrée en prise de serrage (4) est un trou traversant (4) s'étendant à travers la pièce rapportée de formation d'épaulement (4).

5. Pièce rapportée de formation d'épaulement (1) selon de quelconques des revendications précédentes, dans laquelle un angle de rampe (100a) variant de 10° à 60° est associé à l'arête de coupe à rampe (10) de la région de coupe supérieure (200), dans laquelle l'angle de rampe (100a) est mesuré dans la vue en plan de la surface supérieure (2) à l'extérieur de la pièce rapportée de formation d'épaulement (1) entre l'arête de coupe à rampe (10) et une extrapolation linéaire (80) de l'arête de coupe racleuse (8) de la région de coupe supérieure (200).

6. Pièce rapportée de formation d'épaulement (1) selon de quelconques des revendications précédentes, dans laquelle, dans la vue en plan de la surface supérieure (2), la surface périphérique (9) fait saillie sur des parties des arêtes de coupe principales (6, 6a) vers l'extérieur au-delà des arêtes de coupe principales (6, 6a).

7. Pièce rapportée de formation d'épaulement (1) selon de quelconques des revendications précédentes, dans laquelle, dans la vue en plan de la surface supérieure (2), la surface périphérique (9) recule sur des parties de l'arête de coupe à rampe (10) de la région de coupe supérieure (200) derrière cette arête de coupe à rampe (10).

8. Pièce rapportée de formation d'épaulement (1) selon de quelconques des revendications précédentes, dans laquelle, dans la vue en plan de la surface supérieure (2), la surface périphérique (9) est alignée avec l'arête de coupe racleuse (8) de la région de coupe supérieure (200).

9. Pièce rapportée de formation d'épaulement (1) selon de quelconques des revendications précédentes, dans laquelle l'arête de coupe racleuse (8) de la région de coupe supérieure (200) est en pente depuis l'endroit où elle est jointe à l'arête de coupe principale (6) vers la surface inférieure (2a).

10. Pièce rapportée de formation d'épaulement (1) selon de quelconques des revendications précédentes, dans laquelle l'arête de coupe principale (6) de la région de coupe supérieure (200) est en pente depuis l'endroit où elle est jointe à l'arête de coupe racleuse (8) vers la surface inférieure (2a).

11. Pièce rapportée de formation d'épaulement (1) selon de quelconques des revendications précédentes, dans laquelle la surface supérieure (2) a une section siège plane (12) agencée au moins partiellement en dessous de l'arête de coupe principale (6) de la région de coupe supérieure (200).

12. Pièce rapportée de formation d'épaulement (1) selon de quelconques des revendications précédentes, dans laquelle la région de coupe supérieure (200) est la seule région de coupe sur des parties de la surface supérieure (2).

13. Pièce rapportée de formation d'épaulement (1) selon de quelconques des revendications précédentes, dans laquelle le côté de support radial (7) est en forme de cale dans une coupe transversale croisant le côté de support radial (7) dans une vue en plan de la surface supérieure (2) perpendiculairement.

14. Pièce rapportée de formation d'épaulement (1) selon de quelconques des revendications précédentes, dans laquelle l'arête de coupe racleuse (8) et l'arête de coupe principale (10) de la région de coupe supérieure (200) sont jointes l'une à l'autre par un coin de coupe arrondi (16) ayant un rayon d'arrondi (16a) variant de 0,05 mm à 6 mm.

15. Outil de fraisage d'épaulement ayant un corps d'outil et au moins deux pièces rapportées de formation d'épaulement montées de façon amovible dans des cavités de montage du corps d'outil, **caractérisé en ce qu'**au moins une pièce rapportée de formation d'épaulement (1) des au moins deux pièces rapportées de formation d'épaulement est une pièce rapportée de formation d'épaulement (1) selon de quelconques des revendications précédentes.
